# EUROPÄISCHE PATENTSCHRIFT

(11) **EP 3 575 136 B1**
(45) Veröffentlichungstag und Bekanntmachung des Hinweises auf die Patenterteilung: **17.11.2021**
(21) Anmeldenummer: 19173281.7
(22) Anmeldetag: 08.05.2019
(51) Int. Cl.: B60L 50/16, B60L 1/00, B60L 15/20, B60K 6/48

(54) **LÖSCHFAHRZEUG UND VERFAHREN ZUM BETRIEB EINES TEILWEISE ELEKTRISCH BETRIEBENEN LÖSCHFAHRZEUGS**
PARTLY ELECTRICALLY DRIVEN FIRE EXTINGUISHING VEHICLE AND METHOD FOR OPERATING SAME
VÉHICULE D'EXTINCTION ET PROCÉDÉ DE FONCTIONNEMENT D'UN VÉHICULE D'EXTINCTION

(30) Priorität: 29.05.2018 DE 102018208461
(43) Veröffentlichungstag der Anmeldung: 04.12.2019
(73) Patentinhaber: Albert Ziegler GmbH, 89537 Giengen an der Brenz (DE)
(72) Erfinder: Quintenz, Tobias, 89275 Elchingen (DE)
(74) Vertreter: Patentanwälte Magenbauer & Kollegen Partnerschaft mbB

(56) Entgegenhaltungen:
- EP-A1- 0 492 152
- WO-A1-2018/049444
- GB-A- 2 558 300

## Beschreibung

Die vorliegende Erfindung betrifft ein Löschfahrzeug mit einer Feuerlöschpumpe, insbesondere einer Feuerlöschkreiselpumpe, einer elektrischen Antriebsanordnung zum Antrieb des Löschfahrzeugs und einem elektrischen Speicher zum Speichern von elektrischer Energie für die elektrische Antriebsanordnung.

Ein Löschfahrzeug ist ein Kraftfahrzeug, das mit einer Feuerlöschpumpe ausgestattet ist und zur Brandbekämpfung verwendet werden kann. Ein Löschfahrzeug wird beispielsweise als Feuerwehrfahrzeug, Flugfeldlöschfahrzeug und/oder Industriefahrzeug eingesetzt. Aus dem Stand der Technik sind elektrisch angetriebene Löschfahrzeuge bekannt.

Die EP 0 492 152 A1 beschreibt ein Fahrzeug mit einer Wärmekraftmaschine und einer Elektromaschine. Das Fahrzeug umfasst Nebenaggregate, die sowohl von der Wärmekraftmaschine und/oder der Elektromaschine her antreibbar sind. Der Vortrieb des Fahrzeugs erfolgt wahlweise durch die Wärmekraftmaschine, die Elektromaschine oder durch die Wärmekraftmaschine und die Elektromaschine gemeinsam. Es gibt eine Kupplung zwischen den Nebenaggregaten und der Elektromaschine sowie eine Kupplung zwischen den Nebenaggregaten und der Wärmekraftmaschine.

Die DE 10 2010 000 347 A1 beschreibt ein Nebenantriebssystem mit einem elektrischen Antriebssystem zum Antrieb einer Nebenabtriebswelle zur Erzeugung einer mechanischen Leistung, die unabhängig von der mechanischen Leistung von anderen Nebenabtriebswellen eingestellt werden kann.

Die US 2004/0069865 A1 beschreibt ein Feuerwehrfahrzeug, das als Elektrofahrzeug ausgebildet sein kann.

Die WO 2018/049444 A1 beschreibt ein Feuerwehrfahrzeug mit einem Elektromotor und einer Sekundärenergieeinheit, die einen Verbrennungsmotor und einen Generator umfasst. Eine Pumpe kann unter wahlweiser Zwischenschaltung eines Getriebes mechanisch mit der Sekundärenergieeinheit gekoppelt werden.

Die GB 2558300 A beschreibt ein Feuerwehrfahrzeug mit einem Elektromotor zum Antrieb der Räder und einem Range-Extender mit Verbrennungsmotor zum Antrieb einer Pumpe.

Eine Aufgabe der Erfindung besteht darin, ein elektrisch angetriebenes Löschfahrzeug mit einer hohen Reichweite bereitzustellen.

Die Aufgabe wird gelöst durch ein Löschfahrzeug gemäß Anspruch 1. Das Löschfahrzeug umfasst eine nicht-elektrische Antriebsanordnung zum Antrieb der Feuerlöschpumpe.

Folglich kann die Feuerlöschpumpe von der nicht-elektrischen Antriebsanordnung angetrieben werden, so dass bei Verwendung der Feuerlöschpumpe keine oder weniger Energie von dem elektrischen Speicher verbraucht wird. Es bleibt mehr Energie für den elektrischen Antrieb des Löschfahrzeugs übrig, so dass eine höhere Reichweite erzielt werden kann.

Das Löschfahrzeug ist ausgebildet, die Feuerlöschpumpe wahlweise in einem ersten Betriebsmodus oder in einem zweiten Betriebsmodus zu betreiben. In dem ersten Betriebsmodus wird die Feuerlöschpumpe von der nicht-elektrischen Antriebsanordnung angetrieben. In dem zweiten Betriebsmodus wird die Feuerlöschpumpe von der elektrischen Antriebsanordnung angetrieben. Vorzugsweise wird die Feuerlöschpumpe in dem ersten Betriebsmodus nicht von der elektrischen Antriebsanordnung und/oder im zweiten Betriebsmodus nicht von der nicht-elektrischen Antriebsanordnung angetrieben.

Das Löschfahrzeug verfügt ferner über einen dritten Betriebsmodus für die Feuerlöschpumpe. In dem dritten Betriebsmodus wird die Feuerlöschpumpe hybrid von der elektrischen Antriebsanordnung und der nicht-elektrischen Antriebsanordnung angetrieben. Im dritten Betriebsmodus wird die Feuerlöschpumpe also gleichzeitig von der elektrischen Antriebsanordnung und der nicht-elektrischen Antriebsanordnung angetrieben.

Das Löschfahrzeug ist ausgebildet, den Betriebsmodus der Feuerlöschpumpe - also den ersten, zweiten oder dritten Betriebsmodus - auf Basis einer benötigten Leistung der Feuerlöschpumpe festzulegen. Unterhalb eines ersten Leistungsschwellenwerts wird der zweite Betriebsmodus verwendet, zwischen einem ersten Leistungsschwellenwert und einem zweiten Leistungsschwellenwert der dritte Betriebsmodus und oberhalb eines zweiten Leistungsschwellenwerts der erste Betriebsmodus.

Vorteilhafte Weiterbildungen sind Gegenstand der Unteransprüche.

Vorzugsweise verfügt das Löschfahrzeug über eine erste Kupplung zum Ankuppeln der elektrischen Antriebsanordnung an die Feuerlöschpumpe. Zweckmäßigerweise verfügt das Löschfahrzeug ferner über eine zweite Kupplung zum Ankuppeln der nicht-elektrischen Antriebsanordnung an die Feuerlöschpumpe. Vorzugsweise wird mittels jeder Kupplung jeweils ein Antriebselement, beispielsweise eine Antriebswelle, einer Antriebsanordnung mit einem Abtriebselement der Feuerlöschpumpe drehfest gekoppelt.

Vorzugsweise ist das Löschfahrzeug ausgebildet, im ersten Betriebsmodus die elektrische Antriebsanordnung mittels der ersten Kupplung von der Feuerlöschpumpe abzukuppeln. Im ersten Betriebsmodus wird somit die Feuerlöschpumpe nicht von der elektrischen Antriebsanordnung angetrieben und ist auch nicht an diese gekuppelt.

Zweckmäßigerweise umfasst die nicht-elektrische Antriebsanordnung einen Generator zum Laden des elektrischen Speichers. Die nicht-elektrische Antriebsanordnung erfüllt somit eine Doppelfunktion: sie dient zum einen dazu, die Feuerlöschpumpe anzutreiben und zum anderen dazu, den elektrischen Speicher zu laden.

Vorzugsweise ist die nicht-elektrische Antriebsanordnung ausgebildet, beim Antrieb der Feuerlöschpumpe den elektrischen Speicher unter Verwendung des Generators zu laden. Der elektrische Speicher kann also insbesondere auch beim Antrieb der Feuerlöschpumpe geladen werden, vorzugsweise im zweiten Betriebsmodus und oder im dritten Betriebsmodus der Feuerlöschpumpe.

Zweckmäßigerweise umfasst das Löschfahrzeug einen Laderegler, der ausgebildet ist, den Ladezustand des elektrischen Speichers zu überwachen und bei Unterschreiten eines Ladezustand-Schwellenwerts zu bewirken, dass der Generator den elektrischen Speicher auflädt.

Erfindungsgemäß wird ferner ein Verfahren zum Betrieb eines Löschfahrzeugs bereitgestellt. Das Löschfahrzeug umfasst eine Feuerlöschpumpe, insbesondere eine Feuerlöschkreiselpumpe, eine elektrische Antriebsanordnung zum Antrieb des Löschfahrzeugs und eine nicht-elektrische Antriebsanordnung zum Antrieb der Feuerlöschpumpe. Das Verfahren umfasst die Schritte: Erfassen einer benötigten Leistung der Feuerlöschpumpe und, auf Basis der erfassten benötigten Leistung, Antreiben der Feuerlöschpumpe wahlweise mit der elektrischen Antriebsanordnung und/oder der nicht-elektrischen Antriebsanordnung.

Das Verfahren kann insbesondere unter Verwendung des vorgenannten Löschfahrzeugs durchgeführt werden. Zweckmäßigerweise umfasst das Verfahren eines oder mehrere der vorstehend im Zusammenhang mit dem erfindungsgemäßen Löschfahrzeug erläuterten Merkmale.

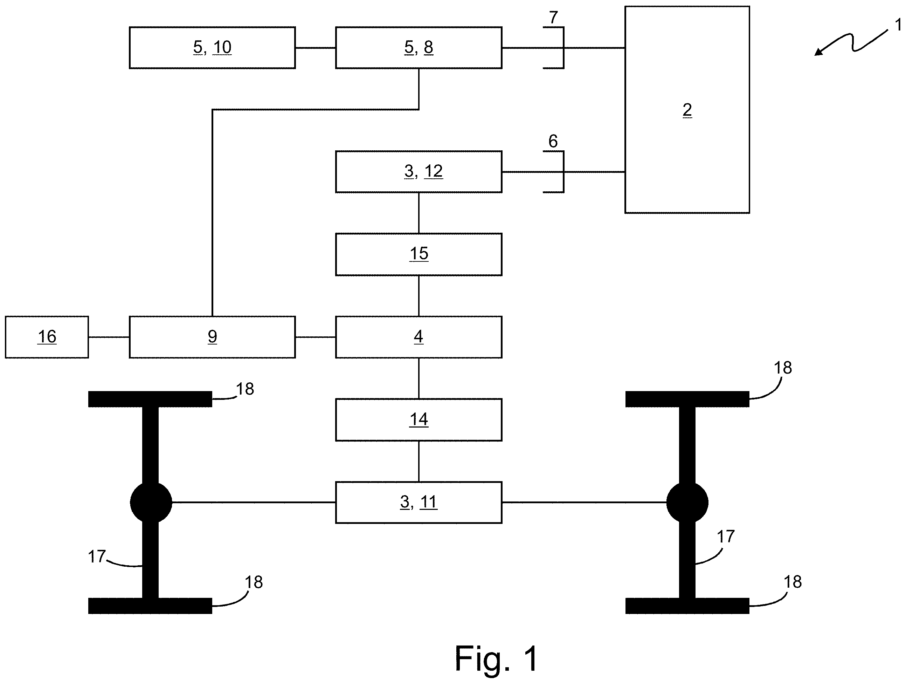

Exemplarische Details und eine beispielhafte Ausführungsformen werden nachstehend unter Bezugnahme auf die Figur 1 erläutert. Dabei zeigt

Figur 1 ein Blockdiagramm eines Löschfahrzeugs.

Die Figur 1 zeigt ein Löschfahrzeug 1, das eine Feuerlöschpumpe 2 umfasst. Bei der Feuerlöschpumpe 2 handelt es sich insbesondere um eine Feuerlöschlöschkreiselpumpe.

Bei dem Löschfahrzeug 1 handelt es sich beispielsweise um ein Feuerwehrfahrzeug. Das Löschfahrzeug 1 umfasst vorzugsweise eine (in den Figuren nicht gezeigte) Personenkabine.

Das Löschfahrzeug 1 umfasst ferner eine elektrische Antriebsanordnung 3. Die elektrische Antriebsanordnung 3 dient zum Antrieb des Löschfahrzeugs 1. Exemplarisch umfasst die elektrische Antriebsanordnung zwei oder mehr elektrische Antriebseinheiten 11, 12, insbesondere zwei oder mehr elektrische Motoren.

Das Löschfahrzeug 1 umfasst ferner einen elektrischen Speicher 4 zum Speichern von elektrischer Energie für die elektrische Antriebsanordnung 3. Bei dem elektrischen Speicher 4 handelt es sich vorzugsweise um eine Batterie, insbesondere um ein Akkumulator.

Ferner umfasst das Löschfahrzeug 1 eine nicht-elektrische Antriebsanordnung 5 zum Antrieb der Feuerlöschpumpe 2. Die nicht-elektrische Antriebsanordnung 5 ist insbesondere als konventioneller Antrieb ausgebildet. Vorzugsweise umfasst die nicht-elektrische Antriebsanordnung 5 eine nicht-elektrische Antriebseinheit 10, insbesondere einen Verbrennungsmotor, insbesondere einen Gas-, Benzin-, Diesel-, Wasserstoff-Motor und/oder einen anderen Antrieb, beispielsweise eine Turbine.

Durch Verwendung der nicht-elektrischen Antriebsanordnung 5 für den Antrieb der Feuerlöschpumpe 2 verbleibt im elektrischen Speicher 4 mehr Energie für den Antrieb des Löschfahrzeugs 1, so dass eine größere Reichweite des Löschfahrzeugs 1 erzielt werden kann.

Wie vorstehend bereits erwähnt, umfasst die elektrische Antriebsanordnung 3 exemplarisch über zwei elektrische Antriebseinheiten 11, 12, die nachstehend auch als erste Antriebseinheit 11 und zweite Antriebseinheit 12 bezeichnet werden soll. Vorzugsweise ist jede elektrische Antriebseinheit 11, 12 ein separater elektrischer Motor. Exemplarisch dient die erste elektrische Antriebseinheit 11 zum Antrieb des Löschfahrzeugs 1, während die zweite elektrische Antriebseinheit 12 dazu verwendet werden kann, die Feuerlöschpumpe 2 anzutreiben.

Die erste elektrische Antriebseinheit 11 ist zweckmäßigerweise ausgebildet, eine oder mehrere Fahrzeugachsen 17 des Löschfahrzeugs 1 anzutreiben, um so die Räder 18 und damit das Löschfahrzeug 1 selbst in Bewegung zu versetzen.

Die erste elektrische Antriebseinheit 11 wird über einen ersten Motorregler 14 mit elektrischer Energie von dem elektrischen Speicher 4 versorgt. Der erste Motorregler 14 kann von einer (in den Figuren nicht gezeigten) Steuereinrichtung angesteuert werden, beispielsweise gemäß einer erfassten Betätigung eines oder mehrerer (in den Figuren nicht gezeigter) Bedienelemente, beispielsweise eines vom Fahrer des Löschfahrzeugs 1 betätigbaren Pedals und/oder Hebels.

Die zweite elektrische Antriebseinheit 12 wird über einen zweiten Motorregler 15 mit elektrischer Energie von dem elektrischen Speicher 4 versorgt. Der zweite Motorregler 15 kann von einer (in den Figuren nicht gezeigten) Steuereinrichtung angesteuert werden, beispielsweise gemäß einer erfassten Betätigung eines oder mehrerer (in den Figuren nicht gezeigter) Bedienelemente, das der Feuerlöschpumpe 2 zugeordnet ist und beispielsweise die Pumpleistung der Feuerlöschpumpe einstellt.

Exemplarisch verfügt das Löschfahrzeug 1 über eine erste Kupplung 6, mit der die elektrische Antriebsanordnung 3, insbesondere die zweite elektrische Antriebseinheit 12, an die Feuerlöschpumpe 2 angekuppelt und abgekuppelt werden kann. Zweckmäßigerweise kann über die erste Kupplung 6 ein Antriebselement der elektrischen Antriebsanordnung 3, insbesondere der zweiten elektrischen Antriebseinheit 12, beispielsweise eine Antriebswelle, mit einem Abtriebselement der Feuerlöschpumpe 2 drehfest gekoppelt werden.

Die erste Kupplung 6 wird zweckmäßigerweise von einer (in den Figuren nicht gezeigten) Steuereinrichtung des Löschfahrzeugs 1 angesteuert, insbesondere gemäß den nachstehend noch erläuterten Betriebsmodi der Feuerlöschpumpe 2.

Zweckmäßigerweise verfügt das Löschfahrzeug 1 ferner über eine zweite Kupplung 7, mit der die nicht-elektrischen Antriebsanordnung 5 an die Feuerlöschpumpe 1 angekuppelt und abgekuppelt werden kann. Zweckmäßigerweise kann über die zweite Kupplung 7 ein Antriebselement der nicht-elektrischen Antriebsanordnung 5, beispielsweise eine Antriebswelle, mit einem Abtriebselement der Feuerlöschpumpe 2 drehfest gekoppelt werden.

Die zweite Kupplung 7 wird zweckmäßigerweise von einer (in den Figuren nicht gezeigten) Steuereinrichtung des Löschfahrzeugs 1 angesteuert, insbesondere gemäß den nachstehend noch erläuterten Betriebsmodi der Feuerlöschpumpe 2.

Die nicht-elektrische Antriebsanordnung 5 umfasst einen Generator 8 zum Laden des elektrischen Speichers 4. Der Generator 8 wird zweckmäßigerweise von der nicht-elektrischen Antriebseinheit 10 angetrieben. Zweckmäßigerweise wird der Generator 8 von derselben Antriebseinheit 10, insbesondere demselben Antriebselement, beispielsweise derselben Antriebswelle, wie die Feuerlöschpumpe 2 angetrieben. Der Generator 8 kann auch als Range-Extender bezeichnet werden.

Das Löschfahrzeug 1 verfügt zweckmäßigerweise einen Laderegler 9. Vorzugsweise ist der Laderegler 9 zwischen den Generator 8 und den elektrischen Speicher 4 geschaltet und steuert das Laden des elektrischen Speichers 4 durch den Generator 8. Zweckmäßigerweise ist der Laderegler 9 ausgebildet, den Ladezustand des elektrischen Speichers 4 zu überwachen und bei Unterschreiten eines Ladezustand-Schwellenwerts zu bewirken, dass der Generator 8 den elektrischen Speicher 4 auflädt. Zweckmäßigerweise werden auf Basis des erfassten Ladezustands die nicht-elektrische Antriebseinheit 10 und/oder der Generator 8 aktiviert.

Das Löschfahrzeug 1 umfasst zweckmäßigerweise ferner einen Ladeanschluss 16 für eine externe Einspeisung. An dem Ladeanschluss 16 kann ein externes Ladekabel angeschlossen werden, um den elektrischen Speicher 4 insbesondere über den Laderegler 9 zu laden. Der elektrische Speicher 4 und der Laderegler 9 können zweckmäßigerweise zusammen in einer Einheit bereitgestellt sein.

Im Folgenden soll auf die verschiedenen Betriebsmodi der Feuerlöschpumpe 2 eingegangen werden.

Das Löschfahrzeug 1 ist zweckmäßigerweise ausgebildet, die Feuerlöschpumpe 2 wahlweise in einem ersten Betriebsmodus, einem zweiten Betriebsmodus und einem dritten Betriebsmodus zu betreiben. In dem ersten Betriebsmodus wird die Feuerlöschpumpe 2 nur von der nicht-elektrischen Antriebsanordnung 5 angetrieben und im zweiten Betriebsmodus wird die Feuerlöschpumpe 2 nur von der elektrischen Antriebsanordnung 3 angetrieben. In dem dritten Betriebsmodus wird die Feuerlöschpumpe 2 hybrid - also gleichzeitig - von der elektrischen Antriebsanordnung 3 und der nicht-elektrischen Antriebsanordnung 5 angetrieben.

Das Löschfahrzeug 1 ist insbesondere ausgebildet, die Kupplungen 6, 7, die nicht-elektrische Antriebseinheit 10 und die zweite elektrische Antriebseinheit 12 auf Basis des aktuell eingestellten Betriebsmodus der Feuerlöschpumpe 2 anzusteuern. Insbesondere ist das Löschfahrzeug 1 ausgebildet, im ersten Betriebsmodus mittels der zweiten Kupplung 7 die nicht-elektrische Antriebsanordnung 5 an die Feuerlöschpumpe anzukuppeln, die nicht-elektrische Antriebsanordnung 5 zu aktivieren, mittels der ersten Kupplung 6 die zweite elektrische Antriebseinheit 12 von der Feuerlöschpumpe 2 abzukuppeln und die zweite elektrische Antriebseinheit 12 zu deaktivieren. Ferner ist das Löschfahrzeug 1 ausgebildet, im zweiten Betriebsmodus mittels der zweiten Kupplung 7 die nicht-elektrische Antriebsanordnung 5 von der Feuerlöschpumpe abzukuppeln, die nicht-elektrische Antriebsanordnung 5 zu deaktivieren, mittels der ersten Kupplung 6 die zweite elektrische Antriebseinheit 12 an die Feuerlöschpumpe 2 anzukuppeln und die zweite elektrische Antriebseinheit 12 zu aktivieren. Ferner ist das Löschfahrzeug 1 ausgebildet, im dritten Betriebsmodus mittels der zweiten Kupplung 7 die nicht-elektrische Antriebsanordnung 5 an die Feuerlöschpumpe 2 anzukuppeln, die nicht-elektrische Antriebsanordnung 5 zu aktiveren, mittels der ersten Kupplung 6 die zweite elektrische Antriebseinheit 12 an die Feuerlöschpumpe 2 anzukuppeln und die zweite elektrische Antriebseinheit 12 zu aktivieren.

Wie bereits erwähnt, erfolgt die Ansteuerung der Kupplungen 6, 7 und der Antriebseinheiten 10, 12 zweckmäßigerweise auf Basis des eingestellten Betriebsmodus. Gemäß einer bevorzugten Ausgestaltung ist das Löschfahrzeug 1 ausgebildet, den Betriebsmodus auf Basis einer benötigten Leistung, insbesondere einer benötigten Pumpleistung, der Feuerlöschpumpe 2 einzustellen. Die benötigte Leistung wiederrum kann zweckmäßigerweise automatisch und/oder manuell, beispielsweise durch Betätigung eines der Feuerlöschpumpe 2 zugeordneten Bedienelements, eingestellt werden. Alternativ oder zusätzlich kann das Löschfahrzeug 1 auch eine Einstellmöglichkeit haben, mit der ein Benutzer direkt den Betriebsmodus einstellen kann. Ferner kann das Löschfahrzeug 1 ausgebildet sein, den Betriebsmodus auf Basis des Ladezustands des elektrischen Speichers 4 zu wählen. Beispielsweise kann automatisch der erste Betriebsmodus gewählt werden, wenn der Ladezustand des elektrischen Speichers 4 gering ist.

Zweckmäßigerweise ist das Löschfahrzeug 1 ausgebildet, die benötigte Leistung der Feuerlöschpumpe 2 mit einem ersten und/oder einem zweiten Leistungsschwellenwert zu vergleichen und auf Basis des Vergleichs den Betriebsmodus festzulegen. Zweckmäßigerweise ist der zweite Leistungsschwellenwert größer als der erste Leistungsschwellenwert. Der zweite Leistungsschwellenwert entspricht zweckmäßigerweise einem maximalen Leistungsniveau der elektrischen Antriebseinrichtung 3, insbesondere der zweiten elektrischen Antriebseinheit 12. Vorzugweise wird unterhalb des ersten Leistungsschwellenwerts der zweite Betriebsmodus verwendet, zwischen dem ersten Leistungsschwellenwert und dem zweiten Leistungsschwellenwert der dritte Betriebsmodus und oberhalb des zweiten Leistungsschwellenwerts der erste Betriebsmodus verwendet.

Vorzugsweise ist das Löschfahrzeug 1 ausgebildet, beim Antrieb der Feuerlöschpumpe 2 durch die nicht-elektrische Antriebsanordnung 5 den elektrischen Speicher 4 unter Verwendung des Generators 8 zu laden, insbesondere im ersten und dritten Betriebsmodus. Der erste Betriebsmodus kann auch als Direktbetrieb und der dritte Betriebsmodus als Hybridbetrieb bezeichnet werden. Zweckmäßigerweise ist das Löschfahrzeug ausgebildet, im Direktbetrieb die freie Energie der nicht-elektrischen Antriebseinheit 10 zum Laden des elektrischen Speichers 4 zu verwenden.

Ferner kann das Löschfahrzeug 1 auch ausgebildet sein, im zweiten Betriebsmodus - also wenn die Feuerlöschpumpe 2 nur von der elektrischen Antriebseinrichtung 3 angetrieben wird - die nicht-elektrische Antriebseinrichtung 5 zu aktivieren, um den elektrischen Speicher 4 zu laden.

Zweckmäßigerweise wird das Löschfahrzeug 1 mittels eines Verfahrens betrieben. Bei dem Verfahren wird eine benötigte Leistung der Feuerlöschpumpe 2 erfasst und auf Basis der erfassten benötigten Leistung die Feuerlöschpumpe 2 wahlweise mit der elektrischen Antriebsanordnung 3 und/oder der nicht-elektrischen Antriebsanordnung 5 angetrieben.

Mittels der beschriebenen Ausgestaltung wird insbesondere erzielt, dass das Löschfahrzeug 1 ohne Lade-Infrastruktur über einen langen Zeitraum, insbesondere über mehrere Tage, betriebsfähig ist. Dies wird insbesondere durch Bereitstellung der nicht-elektrischen Antriebsanordnung 5 erzielt. Zweckmäßigerweise können mit einem solchen Löschfahrzeug 1 80% der Einsätze vollelektrisch durchgeführt werden.

Der Antrieb des Löschfahrzeugs 1 erfolgt vorzugsweise vollelektrisch, dies bedeutet insbesondere, dass die Fahrzeugachsen 17 ausschließlich von der elektrischen Antriebsanordnung 3, insbesondere der ersten elektrischen Antriebseinheit 11, angetrieben werden.

Die zweite elektrische Antriebseinheit 12, vorzugsweise ein elektrischer Motor davon, wird zweckmäßigerweise nur bis zu einer gewissen Leistung eingesetzt. Hiermit sollen kleine Einsätze (zum Beispiel Mülleimerbrand/Fahrzeugbrand usw.) abgearbeitet werden. Die nicht-elektrische Antriebsanordnung 5 kann in diesem Fall vorzugsweise ausschließlich als Range Extender - d.h. zum Aufladen des elektrischen Speichers 4 - verwendet werden.

Wird die Feuerlöschpumpe 2 über dem Leistungsniveau der elektrischen Antriebsanordnung 3, vorzugsweise der zweiten elektrischen Antriebseinheit 12, insbesondere eines elektrischen Motors davon, betrieben, so wird die elektrische Antriebsanordnung 3 durch eine Kupplung von der Feuerlöschpumpe 2 getrennt und die nicht-elektrische Antriebseinheit 10, insbesondere ein Verbrennungsmotor, über die zweite Kupplung 7 auf die Feuerlöschpumpe 2 aufgeschaltet, diese wird dann direkt von der nicht-elektrischen Antriebseinheit 10 angetrieben.

## Patentansprüche

1. Löschfahrzeug (1), umfassend:
- eine Feuerlöschpumpe (2), insbesondere eine Feuerlöschkreiselpumpe,
- eine elektrische Antriebsanordnung (3) zum Antrieb des Löschfahrzeugs (1),
- einen elektrischen Speicher (4) zum Speichern von elektrischer Energie für die elektrische Antriebsanordnung (3), ferner umfassend:
- eine nicht-elektrische Antriebsanordnung (5) zum Antrieb der Feuerlöschpumpe (2),
wobei das Löschfahrzeug (1) ausgebildet ist, die Feuerlöschpumpe (2) wahlweise in einem ersten Betriebsmodus oder einem zweiten Betriebsmodus zu betreiben, wobei die Feuerlöschpumpe (2) in dem ersten Betriebsmodus von der nicht-elektrischen Antriebsanordnung (5) angetrieben wird und im zweiten Betriebsmodus von der elektrischen Antriebsanordnung (3) angetrieben wird, wobei das Löschfahrzeug (1) ausgebildet ist, die Feuerlöschpumpe (2) in einem dritten Betriebsmodus zu betreiben, in dem die Feuerlöschpumpe (2) hybrid von der elektrischen Antriebsanordnung (3) und der nicht-elektrischen Antriebsanordnung (5) angetrieben wird, wobei
das Löschfahrzeug (1) ausgebildet ist, den Betriebsmodus der Feuerlöschpumpe (2) auf Basis einer benötigten Leistung der Feuerlöschpumpe (2) festzulegen, **gekennzeichnet dadurch, dass** das Löschfahrzeug (1) ausgebildet ist, die benötigte Leistung der Feuerlöschpumpe (2) mit einem ersten und einem zweiten Leistungsschwellenwert zu vergleichen und auf Basis des Vergleichs den Betriebsmodus festzulegen, wobei der zweite Leistungsschwellenwert größer ist als der erste Leistungsschwellenwert und wobei unterhalb des ersten Leistungsschwellenwerts der zweite Betriebsmodus verwendet wird, zwischen dem ersten Leistungsschwellenwert und dem zweiten Leistungsschwellenwert der dritte Betriebsmodus und oberhalb des zweiten Leistungsschwellenwerts der erste Betriebsmodus verwendet wird.

2. Löschfahrzeug (1) nach Anspruch 1, **dadurch gekennzeichnet, dass** das Löschfahrzeug (1) eine erste Kupplung (6) zum Ankuppeln der elektrischen Antriebsanordnung (3) an die Feuerlöschpumpe (2) und eine zweite Kupplung (7) zum Ankuppeln der nicht-elektrischen Antriebsanordnung (5) an die Feuerlöschpumpe (2) umfasst.

3. Löschfahrzeug (1) nach Anspruch 2, **dadurch gekennzeichnet, dass** das Löschfahrzeug (1) ausgebildet ist, im ersten Betriebsmodus die elektrische Antriebsanordnung (3) mittels der ersten Kupplung (6) von der Feuerlöschpumpe (2) abzukuppeln.

4. Löschfahrzeug (1) nach einem der voranstehenden Ansprüche, **dadurch gekennzeichnet, dass** die nicht-elektrische Antriebsanordnung (5) einen Generator (8) zum Laden des elektrischen Speichers (4) umfasst.

5. Löschfahrzeug (1) nach einem der voranstehenden Ansprüche, **dadurch gekennzeichnet, dass** die nicht-elektrische Antriebsanordnung (3) ausgebildet ist, beim Antrieb der Feuerlöschpumpe (2) den elektrischen Speicher (4) unter Verwendung des Generators (8)zu laden.

6. Löschfahrzeug (1) nach einem der voranstehenden Ansprüche, **dadurch gekennzeichnet, dass** das Löschfahrzeug (1) einen Laderegler (9) umfasst, der ausgebildet ist, den Ladezustand des elektrischen Speichers (4) zu überwachen und bei Unterschreiten eines Ladezustand-Schwellenwerts zu bewirken, dass der Generator (8) den elektrischen Speicher (4) auflädt.

7. Verfahren zum Betrieb eines Löschfahrzeugs nach einem der voranstehenden Ansprüche, umfassend die Schritte:
- Erfassen einer benötigten Leistung der Feuerlöschpumpe (2) und
- auf Basis der erfassten benötigten Leistung, Antreiben der Feuerlöschpumpe (2) wahlweise mit der elektrischen Antriebsanordnung (3) und/oder der nicht-elektrischen (5) Antriebsanordnung.

## Claims

1. Fire-fighting vehicle (1), comprising:
- a fire pump (2), in particular a centrifugal fire pump,
- an electric drive arrangement (3) for driving the fire-fighting vehicle (1),
- an electrical storage device (4) for storing electrical energy for the electrical drive arrangement (3), further comprising:
- a non-electric drive arrangement (5) for driving the fire pump (2),
wherein the fire-fighting vehicle (1) is adapted to selectively operate the fire pump (2) in a first operating mode or a second operating mode, wherein the fire pump (2) is driven by the non-electric drive arrangement (5) in the first operating mode and is driven by the electric drive arrangement (3) in the second operating mode, the firefighting vehicle (1) being adapted to operate the firefighting pump (2) in a third operating mode in which the firefighting pump (2) is driven in hybrid by the electric drive arrangement (3) and the non-electric drive arrangement (5), wherein
the fire-fighting vehicle (1) is adapted to determine the operating mode of the fire pump (2) based on a required power of the fire pump (2), **characterized in that** the fire-fighting vehicle (1) is adapted to compare the required power of the fire-fighting pump (2) with a first and a second power threshold value and to determine the operating mode based on the comparison, wherein the second power threshold value is greater than the first power threshold value and wherein below the first power threshold value the second operating mode is used, between the first power threshold value and the second power threshold value the third operating mode is used and above the second power threshold value the first operating mode is used.

2. Fire-fighting vehicle (1) according to claim 1, **characterized in that** the fire-fighting vehicle (1) comprises a first coupling (6) for coupling the electric drive arrangement (3) to the fire pump (2) and a second coupling (7) for coupling the non-electric drive arrangement (5) to the fire pump (2).

3. Fire-fighting vehicle (1) according to claim 2, **characterized in that** the fire-fighting vehicle (1) is adapted to uncouple the electric drive arrangement (3) from the fire-fighting pump (2) by means of the first coupling (6) in the first operating mode.

4. Fire-fighting vehicle (1) according to one of the preceding claims, **characterized in that** the non-electric drive arrangement (5) comprises a generator (8) for charging the electric accumulator (4).

5. Fire-fighting vehicle (1) according to one of the preceding claims, **characterized in that** the non-electric drive arrangement (3) is adapted to charge the electric accumulator (4) using the generator (8) when driving the fire-fighting pump (2).

6. Fire-fighting vehicle (1) according to one of the preceding claims, **characterized in that** the fire-fighting vehicle (1) comprises a charge controller (9) which is adapted to monitor the state of charge of the electrical accumulator (4) and, if the state of charge falls below a threshold value, to cause the generator (8) to charge the electrical accumulator (4) .

7. Method of operating a fire-fighting vehicle according to any one of the preceding claims, comprising the steps of:
- detecting a required power of the fire pump (2); and
- on the basis of the detected required power, driving the fire pump (2) selectively with the electric drive arrangement (3) and/or the non-electric drive arrangement (5).

## Revendications

1. Véhicule d'extinction (1) comprenant :
- une pompe à incendie (2), en particulier une pompe à incendie centrifuge,
- un agencement d'entraînement (3) électrique pour l'entraînement du véhicule d'extinction (1),
- un accumulateur électrique (4) pour l'accumulation d'énergie électrique pour l'agencement d'entraînement (3) électrique, comprenant de plus :
- un agencement d'entraînement (5) non électrique pour l'entraînement de la pompe à incendie (2),
dans lequel le véhicule d'extinction (1) est réalisé afin de faire fonctionner la pompe à incendie (2) au choix dans un premier mode de fonctionnement ou un deuxième mode de fonctionnement, dans lequel la pompe à incendie (2) est entraînée dans le premier mode de fonctionnement par l'agencement d'entraînement (5) non électrique et est entraînée dans le deuxième mode de fonctionnement par l'agencement d'entraînement (3) électrique, dans lequel le véhicule d'extinction (1) est réalisé afin de faire fonctionner la pompe à incendie (2) dans un troisième mode de fonctionnement, dans lequel la pompe à incendie (2) est entraînée de manière hybride par l'agencement d'entraînement (3) électrique et l'agencement d'entraînement (5) non électrique, dans lequel
le véhicule d'extinction (1) est réalisé afin de fixer le mode de fonctionnement de la pompe à incendie (2) sur la base d'une puissance nécessaire de la pompe à incendie (2), **caractérisé en ce que** le véhicule d'extinction (1) est réalisé afin de comparer la puissance nécessaire de la pompe à incendie (2) avec une première et une seconde valeur seuil de puissance et de fixer sur la base de la comparaison le mode de fonctionnement, dans lequel la seconde valeur seuil de puissance est supérieure à la première valeur seuil de puissance et dans lequel le deuxième mode de fonctionnement est utilisé en dessous de la première valeur seuil de puissance, entre la première valeur seuil de puissance et la seconde valeur seuil de puissance le troisième mode de fonctionnement et le premier mode de fonctionnement est utilisé au-dessus de la seconde valeur seuil de puissance.

2. Véhicule d'extinction (1) selon la revendication 1, **caractérisé en ce que** le véhicule d'extinction (1) comporte un premier couplage (6) pour le couplage de l'agencement d'entraînement (3) électrique avec la pompe à incendie (2) et un second couplage (7) pour le couplage de l'agencement d'entraînement (5) non électrique avec la pompe à incendie (2).

3. Véhicule d'extinction (1) selon la revendication 2, **caractérisé en ce que** le véhicule d'extinction (1) est réalisé afin de découpler dans le premier mode de fonctionnement l'agencement d'entraînement (3) électrique au moyen du premier couplage (6) de la pompe à incendie (2).

4. Véhicule d'extinction (1) selon l'une des revendications précédentes, **caractérisé en ce que** l'agencement d'entraînement (5) non électrique comporte un générateur (8) pour le chargement de l'accumulateur (4) électrique.

5. Véhicule d'extinction (1) selon l'une des revendications précédentes, **caractérisé en ce que** l'agencement d'entraînement (3) non électrique est réalisé afin de charger lors de l'entraînement de la pompe à incendie (2) l'accumulateur (4) électrique en utilisant le générateur (8).

6. Véhicule d'extinction (1) selon l'une des revendications précédentes, **caractérisé en ce que** le véhicule d'extinction (1) comporte un régulateur de charge (9) qui est réalisé afin de surveiller l'état de charge de l'accumulateur (4) électrique et de provoquer lors de la non-atteinte d'une valeur seuil d'état de charge la charge par le générateur (8) de l'accumulateur électrique (4).

7. Procédé de fonctionnement d'un véhicule d'extinction selon l'une des revendications précédentes, comprenant les étapes :
- la détection d'une puissance nécessaire de la pompe à incendie (2) et
- sur la base de la puissance nécessaire détectée, l'entraînement de la pompe à incendie (2) au choix avec l'agencement d'entraînement (3) électrique et/ou l'agencement d'entraînement (5) non électrique.
